# EUROPEAN PATENT APPLICATION

(11) **EP 4 501 563 A1**
(43) Date of publication of application: **05.02.2025**
(21) Application number: 24191578.4
(22) Date of filing: 29.07.2024
(51) Int. Cl.: B27M 1/08, B23Q 1/01

(54) **MACHINE TOOL WITH IMPROVED WORK SURFACE**

(30) Priority: 03.08.2023 IT 202300016599
(71) Applicant: SCM Group S.p.A., 47921 Rimini (RN) (IT)
(72) Inventor: BAGGIARINI, Elia, 47921 RIMINI (IT)
(74) Representative: Tiburzi, Andrea

(57) **Abstract**

The present invention concerns a machine (M) for working a panel (P) in wood or similar materials, in composite, polymeric, ceramic material or other materials, comprising a support plane (1) to support said panel (P), at least one machining head (2), opposite said support surface (1) and equipped with a tool (3) to work said panel (P), a base panel (4), arranged on said support plane (1), characterized in that it comprises at least one protective layer (5) of porous material, adapted to be placed between said base panel (4) and said panel (P) during machining so as to prevent contact between said tool (3) and said base panel (4).

## Description

The present invention concerns a machine tool for workpieces, in particular pieces made of wood or similar materials, composite, polymeric, ceramic, metallic or other materials, with an improved work surface to support said workpieces.

### Field of invention

More in detail, the invention concerns a machine tool, known as a working center, in particular for so-called nesting operations. Nesting machining means a type of machining in which pieces of different shapes and sizes are obtained from a single panel, reducing waste parts to a minimum.

### Background of the invention

Currently, there are machines known as working centers, for subjecting wooden pieces or similar materials to various machining, such as, for example, milling, drilling, edging. Depending on the type of machining to be carried out, this work surface can be a multifunction work surface or a so-called bar work surface.

Nesting-type machining is generally carried out in working centers with a multifunction table. Generally, working centers for nesting have a base, a support surface of at least one panel, generally in aluminum or Bakelite, arranged on the base, a movable crosspiece along the base, generally positioned above the surface, which can be mobile or fixed with respect to the support surface. Typically the crossbeam supports one or more machining heads. Each machining head is movable along at least one axis. In so-called five-axis working centers, the machining head can move along three orthogonal axes and can rotate around two other axes. Generally, each machining head is equipped with a spindle, coupled, in use, to a tool holder, which can in turn be coupled to a specific tool depending on the type of machining to be performed.

In nesting, the working tool is usually a cutter, for example, an end mill, capable of drilling the panel and cutting out the required parts. The end mill is moved following a cutting pattern designed to maximize the use of the panel, reducing waste to a minimum.

On the support surface of the working center, there is a panel, usually made of MDF, which is called a martyr panel.

The panel to be machined is placed on the martyr panel. The support surface of the working center is equipped with vacuum outlets, connected to a vacuum generation device, in particular a vacuum pump.

The panel to be machined, placed on the martyr panel, is held in position by the vacuum, which is transmitted to the panel to be machined by the vacuum generation device, via the vacuum outlets and through the martyr panel, which is made of breathable material.

In known machines, during through-type machining, which passes through the entire thickness of the panel to be machined, the tool causes grooves on the martyr panel. When the portion of the martyr panel, in which there are grooves exceeds a certain value, it is necessary to subject the martyr panel to a flattening operation, in order to make the martyr surface flat again, to prevent the excessive quantity of grooves from causing decay of the holding force of the workpiece, given by the vacuum generation device. It is clear that this is costly in terms of time and causes a reduction in the productivity of the machine.

Another problem is that after a certain number of flattening operations, the martyr panel needs to be replaced as its thickness becomes too small in relation to the work to be carried out.

A further disadvantage of known nesting working centers is that the friction between the martyr panel and the workpiece may be insufficient. This can cause the piece to be cut to move and therefore to be cut incorrectly, reducing the yield of the panel to be machined and increasing the amount of waste.

### Purpose of the invention

In light of the above, it is, therefore, the aim of the present invention to create a machine tool provided with an improved work table that overcomes the technical problems of known solutions.

Another purpose of the invention is to provide a machine tool in which the work surface is durable, so as to limit machine downtime and increase productivity.

A further purpose of the present invention is to provide a work surface capable of correctly holding in position the panels to be machined.

### Object of the invention

It is, therefore, specific object of the present invention a machine for working a panel in wood or similar materials, in composite, polymeric, ceramic material or other materials, comprising a support plane to support said panel, at least one machining head, opposite said support surface and equipped with a tool to work said panel, a base panel, arranged on said support plane, further comprising at least one protective layer of porous material, adapted to be placed between said base panel and said panel during machining so as to prevent contact between said tool and said base panel.

According to an embodiment of the invention, the base panel may be made of wood or similar materials.

Still according to an embodiment of the invention said protective layer may be made of transpiring material.

Advantageously the protective layer may be made of non-woven fabric material.

Alternatively, the protective layer may be in the form of a net. Advantageously the protective layer may have a plurality of holes.

In an embodiment of the invention, the protective layer may be made of polymeric material.

Preferably the tool is a rotary tool.

According to an embodiment of the invention the machine may comprise vacuum means associated with the support plane for fixing said panel during machining.

### Brief description of the figures

The present invention will be now described, for illustrative but not limitative purposes, according to its preferred embodiments, with particular reference to the figures of the enclosed drawings, wherein:
figure 1 shows an axonometric view of a machine tool comprising an improved working plane according to the invention in a first embodiment;
figure 2 shows a front view of an improved working plane according to the invention in a first embodiment with a working tool;
figure 3 shows an axonometric view of an improved working plane according to the invention in a first embodiment;
figure 4 shows an axonometric view of an improved working plane according to the invention in a first embodiment with a panel to be machined;
figure 5 shows a section of an improved working plane according to the invention in a first embodiment;
figure 6 shows a detailed view of the section shown in figure 5;
figure 7 shows an axonometric view of an improved working plane according to the invention in a second embodiment.

### Detailed description

In the various figures, the similar parts will be indicated with the same reference number.

With reference to the attached figures, it is observed a machine M for machining workpieces made of wood or similar materials, composite, polymeric, ceramic, metallic or other materials equipped with an improved working plane.

In the following, the description will be directed to a machine tool, also known as a working center for nesting, but it is clear that it should not be considered limited to this specific use.

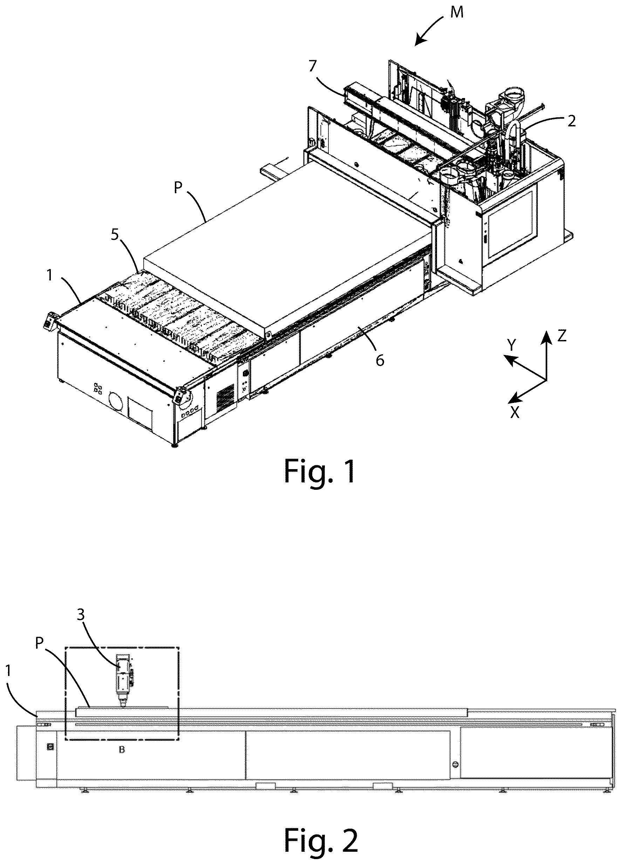

Referring to figure 1, a machine M is observed, comprising a support plane 1 to support the panel P to be machined. The support plane 1 is generally made of aluminum or Bakelite, and allows the support of at least one panel P to be worked on. The support plane 1 is arranged on a base 6.

The machine M has at least one machining head 2 opposite the support plane 1 and is equipped with a tool 3 to work the panel P.

In the embodiment illustrated in the figures, the machine M has a crossbeam 7, opposite to the support plane 1, which can be mobile or fixed with respect to the support plane 1, coupled to one or two vertical uprights. The crosspiece 7 supports one or more machining heads 2. Generally, each machining head is provided with a spindle, coupled, in use, to a tool holder, which can in turn be coupled to a tool 3, for example, a cutter.

In the present embodiment, the machining head 2 is movable along a first axis X, parallel to the main development direction of the support surface 1, integrally with the crossbeam 7; it is movable along a second Y-axis, orthogonal to X-axis, sliding along the crossbeam 7, and it is also movable along a third Z-axis orthogonal to the first X-axis and the second Y-axis.

In the present embodiment, the machining head 1 is a so-called five-axis head, therefore, in addition to having the movements described above, it can rotate around a rotation axis C, parallel to the third Z axis, and around a further rotation axis B, inclined with respect to the rotation axis C.

In another embodiment, the machining head 1 can move along a smaller number of axes and/or rotate around a greater or lesser number of axes.

The support plane 1 is suitable for fixing the panel P to the machine during the machining.

The support plane 1 comprises vacuum means (not shown in the figures) suitable for generating a vacuum to block the panel P to be machined on the support plane 1. The support plane 1 is equipped with one or more vacuum outlets and preferably with grooves to transmit the vacuum uniformly in all points of the panel P. At the perimeter of the panel P to be machined, gaskets are arranged in the grooves of the support plane 1, to delimit a portion of the support plane 1, in which the vacuum, generated by the vacuum means, holds the panel P.

A base panel, called martyr panel 4, is arranged on the support plane.

The martyr panel 4 is preferably made of MDF, wood or similar materials. The material of the martyr panel 4 is breathable, so as to allow the transmission of the vacuum to the panel P to be machined.

The thickness of the martyr panel 4 is preferably about 10-12 mm.

The martyr panel 4 can be subjected to a flattening process to have a surface that is not parallel to a horizontal reference plane, to compensate for any defects in the flatness of the support plane 1.

According to the invention, at least one protective layer 5 of porous material is placed between the martyr panel 4 and the panel P to be machined.

Advantageously, the protective layer 5 is arranged on the martyr panel 4. The panel P to be machined is arranged on the protective layer 5.

The protective layer 5 is preferably made of breathable material. This allows for better vacuum distribution.

In a first embodiment, shown in figures 1-6, the protective layer 5 is made of a non-woven fabric material. By non-woven fabric material it is meant a product similar to a fabric but obtained with machining other than weaving, i.e. the crossing of warp and weft threads via a loom. In a non-woven fabric the fibers present a random pattern, without identifying any ordered structure, while in a fabric the fibers present two prevailing and orthogonal directions to each other, warp and weft.

In a preferred embodiment the fibers of the non-woven fabric are made of polymeric material.

Alternatively, the fibers can be made of glassy material, carbon, animal hair or other materials. The protective layer 5 can for example be made of felt.

The fibers of the protective layer 5 tend to move closer together following the passage of the tool 3, limiting the damage caused by the tool itself. Furthermore, the fibers, due to the force exerted by the vacuum means, compact in the direction of the third Z axis orthogonal to the support plane 2.

The material of the protective layer 5 is such that it has a higher friction coefficient than that of the martyr panel 4.

In this way, with the same degree of vacuum applied to the support surface 1, the panel P to be machined undergoes a smaller displacement during machining.

The layer 5 of porous material preferably has a thickness lower than that of the martyr panel 4.

For example, layer 5 of porous material has a thickness of 3-5 mm.

The layer 5 of porous material advantageously has an extension equal to, or greater than the martyr panel 4. The layer 5 of porous material is substantially flat, and can be configured as a carpet to be placed on the martyr panel 4.

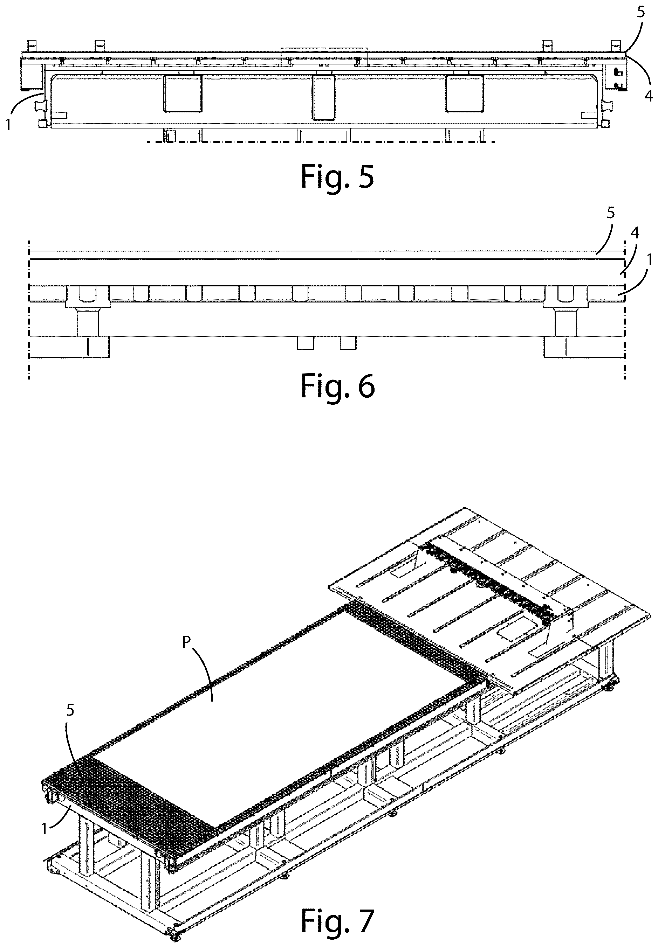

In a second embodiment, shown in figure 7, the protective layer 5 is in the shape of a net.

In a further embodiment, the protective layer 5 has one or more holes. The holes can have a circular or rectangular section, or other shapes.

In these embodiments the protective layer is preferably made of polymeric material, in particular elastomeric material.

The operation of the machine M described above is as follows.

The panel P is placed on the protective layer 5, placed on the martyr panel 4, which in turn is placed on the support surface 1, as shown in figure 1.

The vacuum means are activated to hold the panel by vacuum.

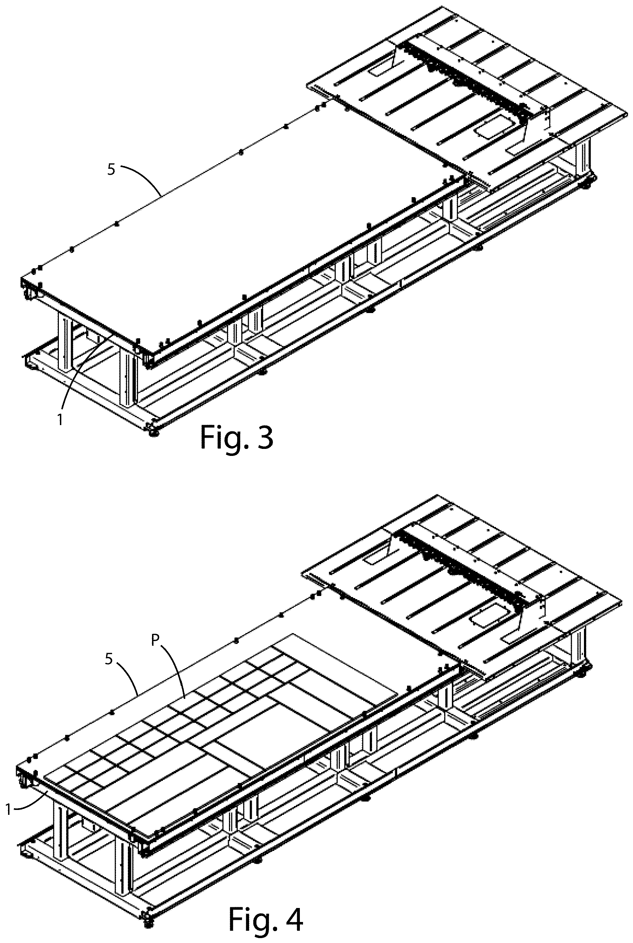

The movement of the crossbeam 7 along the first the cutouts, dividing the panel P into different parts according to a cutting scheme as shown, for example, in figure 4. In other cutting schemes the cut out shapes can also be irregular.

To make cuts having the depth of the panel P, i.e. the dimension of the panel that extends along the third Z axis, the tool 3 comes into contact with the protective layer 5, avoiding contact between the tool 3 and the martyr panel 4 and therefore avoiding wear of the latter.

### Advantages

An advantage of the present invention is to avoid the operations of flattening the martyr panel in working centers for nesting.

Another advantage of the present invention is that of avoiding the replacement of the martyr panel, reducing machine downtime and therefore increasing productivity.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for working a panel (P) in wood or similar materials, in composite, polymeric, ceramic material or other materials, comprising
a support plane (1) to support said panel (P),
at least one machining head (2), opposite said support surface (1) and equipped with a tool (3) to work said panel (P),
a base panel (4), arranged on said support plane (1),
**characterized in that** it comprises at least one protective layer (5) of porous material, adapted to be placed between said base panel (4) and said panel (P) during machining so as to prevent contact between said tool (3) and said base panel (4).

2. Machine (M) according to the preceding claim wherein said base panel (4) is made of wood or similar materials.

3. Machine (M) according to any one of the preceding claims wherein said protective layer (5) is made of transpiring material.

4. Machine (M) according to any one of the preceding claims wherein said protective layer (5) is made of non-woven fabric material.

5. Machine (M) according to any one of claims 1-3 wherein said protective layer (5) is in the form of a net.

6. Machine (M) according to any one of the preceding claims wherein said protective layer (5) has a plurality of holes.

7. Machine (M) according to any one of the preceding claims wherein said protective layer (5) is made of polymeric material.

8. Machine (M) according to any one of the preceding claims wherein said tool (3) is a rotary tool.

9. Machine (M) according to any one of the preceding claims comprising vacuum means associated with the support plane (1) for fixing said panel (P) during machining.
